# Europäisches Patentamt
## European Patent Office
### Office européen des brevets

(19)

(11) Publication number: **0 014 492**
**B1**

(12)

# EUROPEAN PATENT SPECIFICATION

(45) Date of publication of patent specification: **30.06.82**

(51) Int. Cl.³: **F 16 G 5/16**

(21) Application number: **80200037.2**

(22) Date of filing: **15.01.80**

(54) A composite driving belt provided with transverse elements with coupling means, and a transverse element for a driving belt.

(30) Priority: **06.02.79 NL 7900923**

(43) Date of publication of application:
**20.08.80 Bulletin 80/17**

(45) Publication of the grant of the patent:
**30.06.82 Bulletin 82/26**

(84) Designated Contracting States:
**AT BE CH DE FR GB IT LU NL SE**

(56) References cited:
**CH A 256 918**
**DE A 2 414 989**
**FR A 2 178 415**
**FR A 2 242 608**
**FR A 2 416 091**
**US A 3 720 113**
**US A 3 949 621**
**US A 4 080 841**

(73) Proprietor: **Van Doorne's Transmissie B.V.**
**Dr. Hub van Doorneweg 120**
**NL-5026 RA Tilburg (NL)**

(72) Inventor: **Van der Hardt Aberson, Frederic Ernst**
**Carel**
**Tweelingenlaan 22**
**Eindhoven (NL)**

(74) Representative: **Louet Feisser, Arnold Abraham**
**Alfred**
**Postbus 500**
**NL-5000 AM Tilburg (NL)**

A composite driving belt provided with transverse elements with
coupling means, and a transverse element for a driving belt

The invention relates to a driving belt for application on V-shaped pulleys, provided with an endless carrier comprising at least one metal band and a plurality of transverse elements abutting against each other with the head sides and slidably assembled on the carrier, said transverse elements being provided with coupling means comprising at least one projection at one head side and a substantially corresponding recess at the other head side of a transverse element.

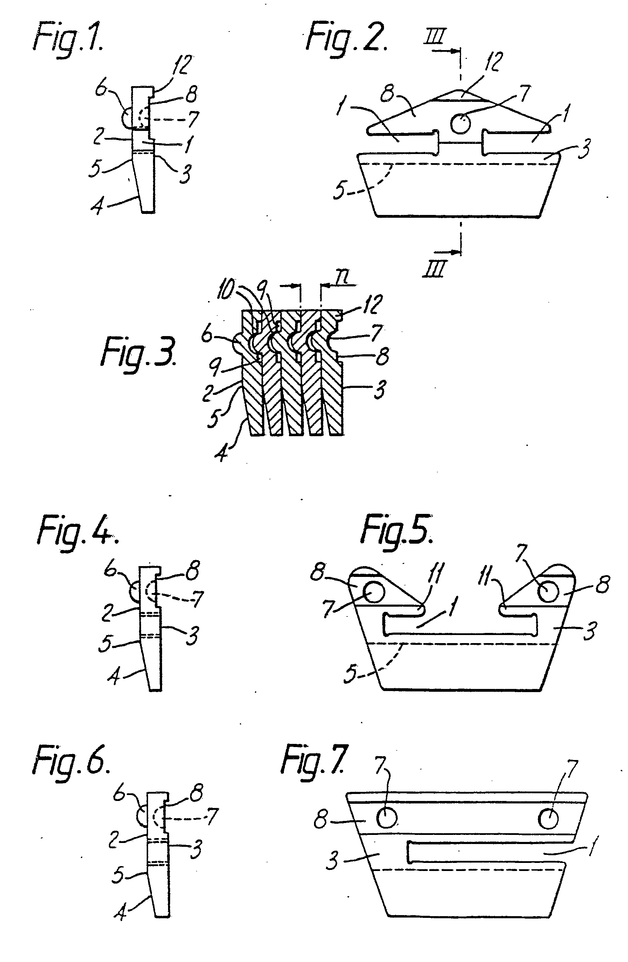

Such a driving belt in which the power substantially is transmitted by thrust forces between the transverse elements is known e.g. from US-A-3,949,621 (Figs. 1 and 5). Said projections resp. recesses serve for centering the transverse elements relatively to each other. Such a driving belt is applied in particular in a transmission with V-shaped pulleys, the conical sheaves of which are displaceable mutually axially in order to vary the transmission ratio.

For a proper operation of the projections, resp. recesses, it is highly important that these accurately enmesh, so that a proper and clearance-free fixation of the transverse elements is obtained.

It is the object of the invention to provide a driving belt whereby an optimal mutual coupling of the transverse elements can be effected.

To this effect, according to the invention, the thickness of the transverse elements, i.e. the distance between the two head sides of a transverse element, around the coupling means is smaller than the nominal thickness of the transverse elements, i.e. the distance between corresponding head sides of successive transverse elements. It is hereby achieved that between the transverse elements around the place of engagement of the projections in the recesses, there is present some clearance. As a result it is possible that the projection through a substantially annular surface, at some distance from the head side whereon the projection is disposed, engages in the recess. This will be further explained on the basis of the drawing.

Moreover this makes it possible to effect a highly accurate fit of the projection in the recess. Depending on the dimensions of the projection, resp. recess, a head side may as a matter of fact be ground off until the projection engages in the recess to such an extent that a very accurate fit is present.

In a preferred embodiment according to the invention, one head side of each transverse element may be provided with a recessed part around the projection(s), resp. the recess(es), which recessed part extends in a path transverse to the axial direction of the driving belt along the entire head side. Such a recessed part may be simply applied by means of a grinding operation, while, if desired, both head sides can be easily finish-ground.

Preferably according to the invention, the recesses may be positioned in the recessed part of the head side of the transverse element. By grinding said head side an accurate fit may be obtained. During this grinding operation no hindrance is encountered of the projection (which is present at the opposite head side).

The invention furthermore relates to a transverse element suitable for application in the desired driving belt. Such a transverse element, in assembled condition, rests with the head sides against the head sides of abutting transverse elements and is provided with coupling means comprising at least one projection at one head side and substantially corresponding recess(es) at the other head side, said transverse element according to the invention being characterised in that the thickness of the transverse element i.e. the distance between both head sides, around the coupling means is smaller than the nominal thickness of the transverse element, i.e. the distance between corresponding head sides of successive transverse elements in assembled condition. According to a further feature of the invention, a head side may be provided with a recessed part around the projection(s) resp. recess(es), which recessed part extends in a path along the entire head side.

Furthermore, according to the invention, the recess(es) may be disposed in the recessed part of the head side.

Some embodiments according to the invention will now be explained, by way of example, with reference to the accompanying drawings.

Of the drawing, Figures 1 and 2; 4 and 5; 6 and 7 are side view respectively front view of a transverse element and Fig. 3 is a cross section on the line III—III in Fig. 2.

In the various embodiments, corresponding parts are indicated by identical reference numerals.

Figures 1 and 2 show an embodiment of a transverse element of the type as described in US—A—3,949,621 (Fig. 1) and US—A—4,080,841 (Fig. 3).

The driving-belt is thereby provided with a carrier comprising two endless bands or band packages which on either side are pushed in the recesses 1 of the transverse elements. During the use of the driving belt, the bands or band packages are prevented from laterally sliding out of the transverse elements by the conical sheaves between which the driving belt runs.

The transverse element is provided with two head sides 2, 3 which come into contact with the head sides of successive transverse elements when assembly on the carrier has taken place.

Head side 2 is fitted with a bevel 4. The transition of the part of the head side 2 parallel to head side 3 and the bevel 4 is formed by a roll-off zone or tilting line 5. During the bending of the driving belt, the transverse elements remain in mutual contact through said tilting line 5.

The transverse element is provided with coupling means in the form of a projection 6 on head side 2 and a recess 7 in head side 3. The transverse element is furthermore fitted with a recessed part 8 in head side 3, which recessed part extends in a patch along the entire head side 3 of the transverse element, viz. in horizontal direction of the Figure.

Fig 3. shows a plurality of transverse elements in cross section on the line III—III of Fig 2. The transverse elements are abutting each other as is the case in a straight part of the driving belt. The nominal thickness of a transverse element is shown by the letter n.

Fig. 3 shows that the projection 6 of each transverse element engages in a recess 7. Since recess 7 is situated in a recessed part 8, the thickness of the transverse element around the projection 6, resp. recess 7 is smaller than the nominal thickness. As a result a space 9 is present between the transverse elements, around the coupling means, so that the projection 6 having an annular surface contacting the recess 7. Said place of contact is indicated by 10. As shown in Fig. 3, said place of contact is spaced from the head side 2 of each transverse element.

The annular contact between projection 6 and recess 7, which is possible by the presence of space 9, appears to satisfy in practice better than for instance a projection that entirely or with a substantial part of its surface butts in the recess.

Fig. 4 and 5 show an embodiment of a transverse element of the type described in US—A—3,720,113.

The carrier in the form of one endless band or band package is pushed from above in the recess 1 of the transverse element, after which the lips 11 are bent in the position shown.

The coupling means comprise two projections 6 and two recesses 7. The recesses 7 are disposed in recessed parts 8 of head side 3.

The transverse element according to fig. 6 and 7 is of the type described e.g. in CH—A—256,918 (Fig. 6 and 7) and DE—A—2,414,989.

The transverse element is provided with a recess 1, wherein the carrier (endless band or band package) may be inserted laterally. Here too, two projections 6 and two recesses 7 are present, which latter are situated in a recessed part 8.

It will be clear in particular from Fig. 3 that an exact fit of the projection 6 in the recess 7 may be obtained by grinding off head side 3 to a sufficient degree.

In the embodiments the recessed part is always situated in the head side 3 where the recess 7 is applied. It is also possible to apply this recessed portion in head side 2 or in both head sides 2, 3.

It is likewise possible to design the part of head side 3 shown in Figures 1, 2 and 3 at 12 recessed, so that the transverse elements do not touch each other above the coupling means (see Fig. 3). If desired, the transverse elements may thereby not only be centred mutually by the coupling means, but likewise mutually transmit a pressure force via the coupling means.

The manufacture of the transverse elements may be effected by a blanking operation from sheet or strip material, whereby likewise the projection 6 resp. recess 7 and, if desired, also bevel 4 and recessed part 8 may be blanked. The pertinent techniques are known per se.

**Claims**

1. A driving belt for application on V-shaped pulleys, provided with an endless carrier comprising at least one metal band and a plurality of transverse elements abutting against each other with the head sides (2, 3) and slidably assembled on the carrier, said transverse elements being provided with coupling means comprising at least one projection (6) at one head side (2) and substantially corresponding recess(es) (7) at the other head side (3) of a transverse element, characterised in that the thickness of the transverse elements (distance between the two head sides) around the coupling means (6, 7) is smaller than the nominal thickness of the transverse elements (distance between corresponding head sides of successive transverse elements).

2. A driving belt according to claim 1, characterised in that a head side (3) of each transverse element is provided with a recessed part (8) around the projection(s) (6), resp. the recess(es) (7), said recessed part (8) extending in a path transverse to the axial direction of the driving belt along the entire head side (3).

3. A driving belt according to claim 1 or 2, characterised in that the recesses (7) are disposed in recessed part (8) of the head sides (3) of the transverse elements.

4. A transverse element for a composite driving belt, said transverse element, in assembled condition, resting with the head sides (2) against the head sides (3) of abutting transverse elements, said transverse element being provided with coupling means comprising at least one projection (6) at a head side (2) and at least one substantially corresponding recess (7) at the other head side (3), characterized in that the thickness of the transverse element (distance between the two head sides) around the coupling means (6, 7) is smaller than the nominal thickness of the transverse element (distance between corresponding head sides of successive transverse elements in assembled condition).

5. A transverse element according to claim 4, characterised in that a head side (3) is provided with a recessed part (8) around the projection(s) (6) resp. the recess(es) (7), said recessed part (8) extending in a path along the entire head side.

6. A transverse element according to claim 4 or 5, characterised in that the recess(es) (7) is/are disposed in the recessed part (8) of the head side (3).

**Patentansprüche**

1. Ein Treibriemen, für Anwendung mit V-formigen Scheiben, versehen mit einem endlosen Träger, der aus minimal einen Metallband besteht und eine Vielheit von Querelementen die mit ihren Hauptflächen (2, 3) gegen einander liegen und verschiebbar auf den Träger montiert sind, wobei diese Querelementen Kupplungsmittel aufweisen mit mindestens einem Vorsprung (6) auf eine Hauptfläche (2) und hauptsächlich damit entsprechende Aussparun(en) (7) in die andere Hauptfläche (3) des Querelementes, dadurch gekennzeichnet, dass die Dicke des Querelementes (Abstand zwischen den beiden Hauptflächen) rund den Kupplungsmittel (6, 7) weniger ist als die nominale Dicke der Querelementen (Abstand zwischen entsprechenden Hauptflächen der nachfolgenden Querelementen).

2. Ein Treibriemen nach Anspruch 1, dadurch gekennzeichnet, dass ein Hauptfläche (3) jedes Querelementes versehen ist mit einem zurückliegenden Teil (8) rund den Vorsprung/die Vorsprünge (6) bzw. die Aussparung(en) (7), wobei das zurückliegende Teil (8) sich ausstreckt über eine Bahn, quer zur Axialrichtung des Treibriemens, über die ganze Hauptfläche.

3. Ein Treibrimen nach Anspruch 1 oder 2, dadurch gekennzeichnet, dass die Aussparung(en) (7) sich befinden in das zurückliegende Teil der Hauptflächen der Querelementen.

4. Ein Querelement für einen zusammengestellten Treibrimen, welches Querelement, in montiertem Zustand, mit seinen Hauptflächen (2) gegen die Hauptflächen (3) der anliegenden Querelementen anliegt, welches Querelement Kupplungsmittel aufweist bestehend aus mindestens einem Vorsprung (6) auf eine Hauptfläche (2) und mindestens eine hauptsächliche damit entsprechende Aussparung(en) (7) in der anderen Hauptflächen (3), dadurch gekennzeichnet, dass die Dicke des Querelements (Abstand zwischen beiden Hauptflächen) rund den Kupplungsmittel (6, 7) weniger ist als die nominale Dicke der Querelementen (Abstand zwischen entsprechenden Hauptflächen der nachfolgenden Querelementen in montiertem Zustand.

5. Ein Querelement nach Anspruch 4, dadurch gekennzeichnet, dass eine Hauptfläche (3) versehen ist mit einem zurückliegeden Teil (8) rund den Vorsprung/die Vorsprünge (6) bzw. die Aussparung(en) (7), wobei das zurückliegende Teil (8) besteht aus einer Bahn über die ganze Hauptfläche.

6. Ein Querelement nach Anspruch 4 oder 5, dadurch gekennzeichnet, dass die Aussparung(en) (7) sich befind(et) (en) in das zurückliegende Teil (8) der Hauptfläche.

**Revendications**

1. Courroie de transmission pour application avec des poullies à gorges en forme V, munis d'un support sans fin comprenant au moins un ruban métallique et une pluralité des éléments transverseaux entre-choquant aves les surfaces principales (2, 3) et montés glissable sur les support, lesdites éléments transverseaux étant prévu des moyens d'accouplement comprenant au moins un projection (6) sur une surface principale (2) et des excavations (7) correspondant substantiellement dans l'autre surface (3), caractérisé en ce que l'épaisseur des éléments transverseaux (la distance entre les deux surfaces principales) autour des moyens d'accouplement (6, 7) est plus petit que l'épaisseur nominale des éléments transverseaux (la distance entre des surfaces correspondantes des éléments transverseaux successives).

2. Courroie de transmission suivant revendication 1, caractérisé en ce qu'une surface principale (3) de chaque élément transversal est munis d'un part creusé (8) autour des projections (6) respectivement les excavations (7), ledit part creusé s'étende dans une bande, transversale à la direction axiale de la courroie de transmission, à travers de la surface principale (3).

3. Courroie de transmission suivant revendication 1 ou 2 caractérisé en ce que les excavations (7) sont disposé dans un part creusé (8) de la surface principale (3) des éléments transverseaux.

4. Element transversal pour une courroie de transmission composé, ledit élément transversal, en condition assemblé, s'appuyant avec la surface principale (2) sur la surface principale (3) d'un élément transversale successive, ledit élément transversal étant munis des moyens d'accouplement comprenant au moins un projection (6) sur une surface principale (2) et au moins une excavation correspondant substantiellement, dans l'autre surface (3), caractérisé en ce que l'épaisseur de l'élément transversal (la distance entre les deux surfaces principales) autour des moyens d'accouplement (6, 7) est plus petit que l'épaisseur nominal de l'élément transversal (la distance entre les surfaces correspondantes des éléments transverseaux successives en condition assemblé).

5. Element transversal suivant revendication 4, caractérisé en ce qu'une surface principale (3) est munis d'un part creusé (8) autour des projection(s) (6) respectivement les excavation(s) (7), ledit part creusé s'étende dans une bande à travers de la surface (3).

6. Elément transversal suivant revendication 4 ou 5 caractérisé en ce que les excavations sont disposées dans un part creusé (8) de la surface principale (3).

Fig.1.

Fig.2.

Fig.3.

Fig.4.

Fig.5.

Fig.6.

Fig.7.

1